Europäisches Patentamt

European Patent Office

Office européen des brevets

(19)

(11) Numéro de publication: **0 249 554 B1**

(12) **FASCICULE DE BREVET EUROPEEN**

(45) Date de publication du fascicule du brevet:
23.05.90

(51) Int. Cl.⁵: **C08C 1/07, C08F 6/18**

(21) Numéro de dépôt: 87401293.3

(22) Date de dépôt: **10.06.87**

(54) Procédé d'agglomération d'un latex, latex aggloméré obtenu et son application à la modification de matrices thermoplastiques pour les rendre résistantes au choc.

(30) Priorité: 13.06.86 FR 8608556

(43) Date de publication de la demande:
16.12.87 Bulletin 87/51

(45) Mention de la délivrance du brevet:
23.05.90 Bulletin 90/21

(84) Etats contractants désignés:
AT BE CH DE ES FR GB GR IT LI LU NL SE

(56) Documents cités:
EP-A- 0 029 613

(73) Titulaire: **NORSOLOR S.A., Tour Aurore Place des Reflets, F-92080 Paris la Défense Cédex 5(FR)**

(72) Inventeur: **Thyebault, Hervé, Pebble Cottage Milestone Avenue, Charvil Reading (Berks.) RG10 9TN(GB)**
Inventeur: **Riess, Gérard, 31, rue du Meunier, F-68200 Mulhouse(FR)**

(74) Mandataire: **Chaillot, Geneviève, Cabinet CHAILLOT 21, avenue Louise de Bettignies, F-92700 Colombes(FR)**

## Description

La présente invention concerne un procédé d'agglomération d'un latex à base d'un polymère choisi parmi les élastomères et les résines thermoplastique, le latex obtenu par ce procédé, ainsi que son application à la modification de matrices thermoplastiques rigides pour les rendre résistantes au choc. A titre d'exemples, on peut mentionner l'application d'un latex à base de polybutadiène à la préparation de résines acrylonitrile-butadiène-styrène (ABS), ou bien l'application de latex acryliques multicouches ou de latex SBR au renforcement de matrices à base de méthacrylate de méthyle et styrène, ou encore l'application de latex acrylique multicouches au renforcement de matrices de polystyrène.

On sait que les latex sont constitués par des émulsions de polymères dans de l'eau additionnée de divers agents, comme des agents émulsionnants, stabilisants, etc., et qu'ils sont le plus souvent obtenus directement par une polymérisation en émulsion. Le procédé d'agglomération a pour but d'accroître la taille des particules des polymères dans ces émulsions.

Par exemple, si la vitesse de réaction des monomères est faible, on a intérêt, notamment dans le cas d'une fabrication à l'échelle industrielle, pour éviter un gaspillage d'énergie et de temps, à utiliser des vitesse de polymérisation élevées conduisant à des tailles de particules faibles, inférieures à 200 nm, et à réaliser alors une agglomération de ces particules de taille intermédiaire, leur permettant d'atteindre la taille finale désirée.

Ainsi, pour obtenir une résine ABS possédant de bonnes caractéristiques de résistance au choc, il est nécessaire de pouvoir disposer d'un latex à base de polybutadiène dont les tailles de particules se situent entre 300 et 700 nm. Or, par la technique habituelle de poly mérisation en émulsion du butadiène, les tailles de particules n'augmentent qu'à raison de 10 nm par heure, si bien qu'on effectue la polymérisation de façon à obtenir des latex dont les particules de polymère sont de faible taille (de l'ordre de 80-200 nm), pour recourir ensuite à une technique d'agglomération.

Le principe de toutes les techniques connues d'agglomération de latex est le passage d'un état stable dans lequel le latex renferme de fines particules de polymère à un autre état stable dans lequel le latex renferme de grosses particules de polymère, sous l'effet d'un moyen physique, chimique ou physico-chimique, l'état stable final pouvant, le cas échéant, être assuré par une post-stabilisation du latex.

Les procédés d'agglomération proposés dans la littérature peuvent être classés en deux catégories suivant qu'ils n'utilisent pas d'agent chimique, ou, au contraire, qu'ils en utilisent un.

Les premiers, parmi lesquels on peut citer la méthode par refroidissement et celle par gradient de pression, présentent l'avantage de ne pas polluer les latex, et, par conséquent, de ne pas perturber le traitement ultérieur de ceux-ci (par exemple, le greffage dans le cas de l'obtention d'ABS à partir d'un latex de polybutadiène) et les propriétés des produits résultants.

Les seconds utilisent, comme agents chimiques, ou bien des solvants, comme le benzène, le toluène, l'acétone et des mélanges du type benzène-alcool, pour leur action déstabilisante et gonflante, ou bien des électrolytes, sels ou acides, qui agissent par destruction partielle de la protection d'émulsionnant, ou encore des polymères hydrophiles : l'alcool polyvinylique, le polyvinylméthyléther, le polyoxyéthylène, les polyélectrolytes acryliques, les polyuréthannes, le polyéthylèneglycol (CARBAMAX 20M), la carboxyméthylcellulose et le polyvinylacétal.

Toutefois, tous ces procédés connus présentent les désavantages suivants :
- une forte consommation d'énergie ;
- une formation de coagulum en quantité plus ou moins grande ;
- une taille limitée et plutôt faible des particules agglomérées ;
- une forte dépendance de l'agglomération par rapport à la température et au temps ; et
- un contrôle difficile ainsi qu'une reproduction difficile de la distribution des tailles des particules agglomérées.

Pour remédier à ces inconvénients, on a déjà proposé, par le brevet européen n° 29613, un procédé pour l'agglomération de latex à base de polymères caoutchouteux, ce procédé consistant à ajouter au latex à agglomérer, un autre latex (dit latex agglomérant) contenant :

(1) un polymère, différent de celui présente dans le latex à agglomérer et moins lipophile que ce dernier, choisi parmi (a) les homopolymères d'acrylates et de méthacrylates d'alkyle en $C_1$-$C_{12}$ ; et (b) des copolymères de monomères à insaturation éthylénique capables de former des homopolymères insolubles dans l'eau, et
(2) un agent tensio-actif non ionique consistant en un produit d'addition de l'oxyde d'éthylène sur des composés organiques contenant, dans leur molécule, des atomes d'hydrogène réactifs.

Ce procédé connu présente cependant quelques inconvénients et limites.

En premier lieu, on peut souligner que le polymère du latex à agglomérer devant, dans ce procédé connu, être différent de celui du latex agglomérant, et le principal latex à agglomérer étant le polybutadiène, il n'est pas possible d'utiliser un latex de polybutadiène comme latex agglomérant.

En second lieu, la synthèse du latex agglomérant par adsorption du tensio-actif agglomérant sur latex initial entraîne la présente du tensio-actif anionique de ce dernier, qui diminue la taille du latex aggloméré et peut conduire à une pré-agglomération, voire à un début de précipitation du latex agglomérant.

En troisième lieu, on obtient toujours, dans ce procédé connu, une population bimodale.

Les présents inventeurs ont découvert de façon surprenante qu'en remplaçant l'agent tensio-actif (2) sus-indiqué du latex agglomérant par un copolymère comportant au moins une séquence polyoxyéthylène et au moins une séquence d'un polymère vinylique, diénique, d'ester acrylique et méthacrylique, ce polymère multiséquencé étant par ailleurs celui en présence duquel est effectuée la préparation du latex agglomérant, on pouvait éviter les inconvénients du procédé connu, à savoir :
- d'une part, que les polymères du latex à agglomérer et agglomérant peuvent être identiques, et que, d'une façon générale, on peut élargir la famille des polymères à agglomérer aux polymères thermoplastiques sans pour autant être amené à effectuer l'agglomération à une température supérieure à la température de transition vitreuse du polymère à agglomérer, ce qui est le cas pour le procédé qui est décrit dans le brevet européen n° 29613 et qui est limité à l'emploi de polymères à agglomérer caoutchouteux ;
- d'autre part, que l'on peut facilement obtenir des particules agglomérées de taille importante ; et
- enfin, qu'une population au choix monomodale ou bimodale peut être obtenue suivant la valeur du rapport de la masse de polymère agglomérant dans 100 g de latex final à la masse de polymère à agglomérer dans 100 g de latex final, ce qui constitue un aspect tout à fait inattendu de la présente invention.

En outre, l'emploi du copolymère multiséquencé précité procure les avantages complémentaires de permettre :
- d'effectuer l'agglomération dans un large domaine de température et dans un large domaine d'extraits secs du latex agglomérant et du latex à agglomérer (on peut notamment travailler à des valeurs d'extraits secs en latex agglomérant beaucoup plus faibles que dans le procédé connu) ; et
- d'atteindre un pourcentage de particules agglomérées de 100%.

La présente invention a donc pour objet un procédé d'agglomération d'un latex de polymère choisi parmi les élastomères et les résines thermoplastiques, caractérisé par le fait qu'on effectue le mélange du latex à agglomérer avec un latex agglomérant formé de :

(A) un polymère choisi parmi les élastomères et les résines thermoplastiques ; et
(B) un agent tensio-actif non-ionique consistant en un polymère séquencé comportant au moins une séquence polyoxyéthylène et au moins une séquence d'un polymère choisi parmi les polymères vinyliques, diéniques, d'esters acryliques et méthacryliques,

ledit latex agglomérant étant obtenu par la synthèse du polymère défini sous (A) au cours de laquelle (B) a été utilisé comme tensio-actif.

Parmi les polymères des latex à agglomérer et agglomérants, on mentionnera notamment les homopolymères et copolymères du butadiène, de l'isoprène, du styrène, de l'alpha-méthylstyrène, des vinyltoluènes, de l'acrylonitrile, des esters alkyliques des acides acrylique, méthacrylique, maléique, fumarique, crotonique et itaconique, dans lesquels le groupe alkyle possède de 1 à 12 atomes de carbone, les latex à agglomérer pouvant également être des latex de SBR ou des latex acryliques multicouches (bi- ou tri-couches) de structure dite "core-shell".

De préférence, on choisira un agent tensio-actif non ionique (B) consistant en un polymère triséquencé, de préférence en un polymère comportant deux séquences polyoxyéthylène d'extrémité. On peut également mettre en oeuvre un agent tensio-actif non-ionique (B) consistant en un polymère bi-séquencé.

Par ailleurs, on choisira notamment un polymère dont la (ou les) séquence(s) autre(s) que la (ou les) séquence(s) polyoxyéthylène est (ou sont) constituée(s) par du polystyrène. Ainsi, on peut mentionner le tensio-actif B qui est constitué par le copolymère triséquence polyoxyéthylène-polystyrène-polyoxyéthylène, désigné ci-après par POE-PS-POE.

En outre, le tensio-actif (B) présentera avantageusement les caractéristiques suivantes :
- une masse moléculaire moyenne en nombre comprise entre 1000 et 1 000 000 ; et
- une teneur en polyoxyéthylène allant de 5 à 95% en poids.

Les tensio-actifs (B) mis en oeuvre dans le procédé conforme à la présente invention sont préparés en règle générale par voie anionique, ce qui présente l'avantage de conduire à des prpoduits pratiquement purs. Dans le cas de la préparation du copolymère POE-PS-POE, la séquence PS est amorcée par des amorceurs bi-fonctionnels du type "tétramères de l'alpha-méthylstyrène" dans le tétrahydrofuranne à une température de -80°C. La séquence POE est ensuite polymérisée à une température de 30°C.

Conformément à un mode de réalisation préféré de la présente invention, on utilise un latex à agglomérer préparé par polymérisation en émulsion en présence d'un agent tensio-actif anionique comme le laurate de potassium et le dodécylsulfate de sodium (SDS), d'un initiateur de radicaux libres comme le persulfate de potassium et d'un agent de transfert de chaîne comme le tertiododécylmercaptan, et à une température de l'ordre de 40° et 90°C. Le diamètre des particules de polymère dans le latex à agglomérer est notamment compris entre 50 et 300 nm et le taux de solide dudit latex est compris entre 5 et 50% en poids.

De même, on utilisera notamment un latex agglomérant dans lequel le diamètre des particules du polymère (A) sera compris entre 60 et 500 nm et qui présente un taux de solide compris entre 1 et 40% en poids.

Conformément à l'invention, les latex agglomérants sont préparés par polymérisation en émulsion en présence de l'agent tensio-actif non-ionique (B), ce qui permet de les obtenir directement. La polymérisation a également lieu en présence d'un initiateur de radicaux libres comme le persulfate de potassium. La présence d'un agent de transfert de chaîne, comme le tertiododécylmercaptan, s'avère pratiquement in-

*dispensable ; cet agent a pour but de limiter la longueur des chaînes et il joue également le rôle d'initiateur* en phase organique. Il est également possible d'ajouter au mélange un alcool, comme le méthanol, qui agit comme co-tensio-actif et qui provoque une nette diminution de la taille des particules en diminuant notablement la tension interfaciale particules-solvant ; ceci permet d'ajuster la taille des particules de latex. On pourrait du reste utiliser à ce même effet un autre tensio-actif comme le laurylsulfate de sodium. La polymérisation est effectuée en batch ou en semi-continu, à une température de l'ordre de 40 à 90°C (par exemple, 70°C). Le taux de conversion est très élevé et peut atteindre 100%.

Le diamètre des particules de polymère dans les latex agglomérants est fonction des monomères mis en oeuvre (ainsi, il semble être plus faible pour l'acrylate de butyle que pour le butadiène et le styrène) de la concentration en alcool agissant comme co-tensio-actif (comme indiqué ci-dessus), et du procédé utilisé (le procédé en semi-continu conduit à des tailles de particules beaucoup plus faibles par rapport au procédé batch) ; par ailleurs, le diamètre des particules diminue lorsque les concentrations en copolymère (B), en alcool co-tensio-actif et en initiateur augmentent ; en revanche, une augmentation de la taille des particules est observée lorsque la masse moléculaire Mn du copolymère (B) augmente.

Pour effectuer l'agglomération, on peut procéder en additionnant le latex agglomérant au latex à agglomérer, ou bien en additionnant le latex à agglomérer au latex agglomérant. Il a été constaté en effet que la méthode de mélange utilisée pour effectuer l'agglomération n'a pratiquement aucune influence, si ce n'est dans des cas particuliers, sur le diamètre des particules agglomérées résultantes. En générale, on préfère dans la pratique suivre la première méthode, car il est facile d'ajouter le latex agglomérant (en principe, très petit volume) au latex à agglomérer (en principe, très grand volume).

Par ailleurs, on effectue le mélange d'agglomération selon l'invention pendant un temps en règle générale compris entre une minute et 48 heures ; de même, on effectue ce mélange à une température qui peut être comprise entre 10°C et 100°C.

Conformément à la présente invention, on introduit le latex agglomérant en une quantité d'au moins 0,05 partie en poids du polymère solide (A) et d'au moins 0,0001 partie en poids de l'agent tensio-actif (B) pour 100 parties en poids du polymère présente dans le latex à agglomérer. On peut notamment introduire le latex agglomérant en une quantité correspondant à 0,05-20 parties en poids du polymère solie (A) et de 0,0001-0,2 partie en poids de l'agent tensio-actif (B) pour 100 parties en poids du polymère présent dans le latex à agglomérer. Il convient toutefois de souligner que les quantités sus-indiquées ne sont absolument pas critiques.

Conformément à un aspect très intéressant de la présente invention, il est apparu que les courbes représentant la taille des particules agglomérées en fonction de la valeur du rapport entre la masse de polymère agglomérant et celle du polymère à agglomérer dans 100 grammes de latex final, passent toutes en règle générale par un maximum, la population obtenue étant bimodale ou monomodale, suivant que R est inférieur ou supérieur à la valeur correspondant à ce maximum. Ceci constitue une observation très intéressante par comparaison avec les agglomérations obtenues dans le procédé décrit dans le brevet européen n° 29 613 sus-indiqué.

La morphologie des particules agglomérées est en général sphérique et la surface de ces particules est lisse. De plus, les particules agglomérées obtenues sont stables thermiquement (cycle gel-dégel), aux ultra-sons, à une post-addition de latex agglomérant et aux tensions de cisaillement.

On a pu ainsi obtenir des particules agglomérées ayant une taille allant jusqu'à 1700 nm.

La présente invention porte également sur les latex agglomérés obtenus par le procédé qui vient d'être défini ainsi que sur l'application de ces latex agglomérés à la modification de matrices thermoplastiques pour les rendre résistantes au choc. Ces matrices sont notamment constituées par des polymères thermoplastiques rigides d'au moins un monomère choisi parmi les méthacrylates d'alkyle, dont le groupe alkyle comprend de 1 à 4 atomes de carbone, le styrène, les styrènes substitués, l'acrylonitrile, le méthacrylonitrile, ou par des polymères de plus et 50% en poids d'au moins l'un des monomères précités et d'au moins un autre monomère copolymérisable à insaturation monoéthylénique. Des exemples d'application ont été cités dans l'introduction du présent mémoire descriptif. Les techniques de préparation de ces matrices renforcées sont des techniques classiques, connues de l'homme du métier. De façon générale, les particules agglomérées subissant un enrobage avant floculation, lavage et séchage, l'étape ultérieure étant la dispersion dans la matrice.

On décrira plus en détail ci-après, à titre indicatif et non limitatif, différentes agglomérations de latex qui ont été effectuées par le procédé conforme à la présente invention. Les latex mis en oeuvre dans ces exemples ont été désignés par LBP, LS, LPBA et LSBR pour les latex à agglomérer respectivement de polybutadiène, de polystyrène, de poly(acrylate de butyle et de copolymère butadiène-styrène, et par LBPCop, LPSCop, LPBACop et LPBA-SCop, pour les latex agglomérants respectivement de polybutadiène, de polystyrène, de poly(acrylate de butyle) et de copolymère acrylate de butyl-styrène. Cop désignant le copolymère triséquencé POE-PS-POE qui est le tensio-actif non ionique en présence duquel a eu lieu la préparation du latex agglomérant. Les pourcentages indiqués dans les exemples suivant sont donnés en poids.

## I - PREPARATION DES LATEX A AGGLOMERER -

### 1) Préparation de latex de polybutadiène

Dans un réacteur de 8 l, on engage, après avoir mis progressivement en marche l'agitation à 500 tours/minute, successivement 500 g d'eau, 6,3 g d'acide laurique préalablement dissous dans 200 g d'eau, 1,75 g d'hydroxide de potassium, 2,10 g de tertiododécylmercaptan (TDM), 1,40 g d'hydroxyde de potassium dissous dans 50 g d'eau, et on rince par 500 g d'eau. On désoxygène l'ensemble du réacteur en faisant le vide puis introduisant de l'azote à une pression de 3 bars. On chauffe à 70°C. On ajoute, par le sas et par pression d'azote, 2,8 g de persulate de potassium dissous préalablement dans 100 g d'eau, et on fait suivre d'un rinçage par 50 g d'eau.

Les latex de polybutadiène LPB1 à LPB6, dont les caractéristiques sont rapportées dans le tableau 2 ci-après ont pu être préparés de cette manière, en faisant varier la pression.

### 2) Préparation des autres latex à agglomérer

#### a) mode opératoire général

A une température constante de 70°C, sous agitation et sous flux d'azote, on engage de l'eau, le tensio-actif et l'hydroxyde de sodium. Après complète dissolution du tensio-actif, on ajoute le mélange, monomère-TDM. Au bout de 10 mn, lorsque la température est redevenue constante, on ajoute le persulfate de potassium préalablement dissous dans de l'eau.

#### b) préparation de latex de polystyrène et de poly-(acrylate de butyle)

On a suivi le mode opératoire générale ci-dessus pour préparer les latex particuliers comme indiqué dans le tableau 1 ci-dessous, les caractéristiques de ces latex étant également mentionnés dans le tableau 2 ci-après.

### TABLEAU 1

| Latex à agglomérer préparé | Masse de monomère engagée (g) | Tensio-actif Type | Masse engagée (g) | Masse de $K_2S_2O_8$ engagée (g) | Masse d'hydroxyde de potassium engagée (g) | Masse de TDM engagée (g) |
|---|---|---|---|---|---|---|
| LPS | 100 | acide laurique | 3,03 | 0,40 | 0,85 | 0,3 |
| LPBA 1 | 100 | acide laurique | 0,80 | 0,40 | 0,80 | 0,3 |
| LPBA 2 | 160 | SDS | 4,85 | 0,39 | 0 | 0,4 |

### 3) Caractéristiques des latex à agglomérer préparés selon 1) et 2)

### TABLEAU 2

| Type de latex à agglomérer | $\varnothing$ moyen (nm) | écart type (nm) | Taux de solide (%) | Tension superficielle ($10^2$ N/m) |
|---|---|---|---|---|
| LPB1* | 203 | 51,5 | 30,6 | $71,3 \times 10^{-5}$ |
| LPB2** | 181 | 48,4 | 30,7 | $60,1 \times 10^{-5}$ |
| LPB 3 | 112 | 33,2 | 31,0 | $72,6 \times 10^{-5}$ |
| LPB4 | 104 | 27,8 | 32,2 | $73,2 \times 10^{-5}$ |
| LPB5 | 100 | 24,1 | 32,3 | $72,1 \times 10^{-5}$ |
| LPS | 75 | 25 | 16,9 | |
| LPBA1 | 139 | 26 | 33,1 | |
| LPBA2 | 125 | 22 | 32,9 | |

\* Latex très réticulé

\*\* Latex peu réticulé

II - PREPARATION DES LATEX AGGLOMERANTS -

1) Tensio-actifs copolymères triséquencés POE-PS-POE

Les caractéristiques de ces tensio-actifs sont indiquées dans le tableau 3 suivant :

TABLEAU 3

| Cop | % PS | Mn du tronc PS | Mn de chaque séquence POE | Mn du Cop |
|-----|------|----------------|---------------------------|-----------|
| 1 | 40,5 | 2400 | 1800 | 6000 |
| 2 | 16,1 | 2400 | 6300 | 15000 |
| 3 | 21,0 | 1600 | 3000 | 7600 |
| 4 | 18,4 | 1600 | 3600 | 8800 |
| 5 | 21,0 | 1800 | 3400 | 8600 |
| 6 | 17,8 | 1800 | 4200 | 10200 |
| 7 | 9,1 | 1800 | 9000 | 19800 |

2) Mode opératoire général de préparation de ces latex agglomérants par le procédé en batch

Dans un réacteur en verre de 1 l, thermostaté par un bain aqueux à une température constante de 70°C, on introduit l'eau, le tensio-actif Cop et du méthanol ; l'air résiduel est éliminé par barbotage continu d'azote. On agite à une vitesse qui sera maintenue constante de 250 tours/min. Après complète dissolution du tensio-actif Cop et lorsque la température a atteint 70°C, on ajoute le mélange monomère(s)-TDM. Au bout de 10 mn, lorsque la température est redevenue constante, on ajoute le persulfate de potassium dissous dans 15 g d'eau, l'addition du persulfate définissant le début de la réaction.

3) Mode opératoire général de préparation de ces latex agglomérants par le procédé semi-continu

On procède initialement comme indiqué au paragraphe 2), sauf que l'on ajoute 30% du mélange monomère-TDM et 5 mn après, la totalité de l'amorceur dissous dans l'eau. On laisse ensuite s'effectuer la polymérisation jusqu'à 100% de taux de conversion, ce qui conduit au latex "semence". On ajoute alors en continu les 70% restants du mélange monomère-TDM à une vitesse de 0,3 ml/mn.

4) Préparation de différents latex agglomérants

On a suivi les modes opératoires généraux ci-dessus pour préparer les latex particuliers comme indiqué dans le tableau 4 ci-dessous, dans lequel figurent également les caractéristiques de ces latex.

TABLEAU 4

| Type de latex agglomérant | Masse de tensio-actif POE-PS-POE (g) | K2S2O8 (g) | Masse de monomère (s) (g) | Masse de transféreur (g) | Masse de MeOH (g) | Diamètre moyen (nm) | Ecart type (nm) | Taux de conversion (%) | Tension superficielle ($10^2$ N/m) |
|---|---|---|---|---|---|---|---|---|---|
| LPBACop1 | 4 | 0,1 | 65 | 0,4 | 60 | 197 | 43,1 | 99,8 | |
| LPBACop2 | 4 | 0,1 | 65 | 0,4 | 60 | 155 | 37,8 | 90,0 | |
| LPBACop3 | 4 | 0,1 | 65 | 0,0 | 60 | 117 | 31,2 | | |
| LPBACop4a | 4 | 0,1 | 65 | 0,4 | 60 | 135 | 32,5 | 92,5 | $45,6 \times 10^{-5}$ |
| LPBACop4b | 4 | 0,1 | 65 | 0,4 | 0 | 197 | 64,4 | 69,0 | $46,9 \times 10^{-5}$ |
| LPBACop4c | 5 | 0,1 | 65 | 0,4 | 60 | 114 | 32,4 | 99,9 | $45,1 \times 10^{-5}$ |
| LPBACop7 | 4 | 0,1 | 65 | 0,4 | 60 | 185 | 52,4 | 88,0 | $46,6 \times 10^{-5}$ |
| LPSCop4 | 4 | 0,1 | 65 | 0,4 | 60 | 186 | 44,9 | 100,0 | $47,8 \times 10^{-5}$ |
| LPBCop4 | 8 | 0,2 | 130 | 0,8 | 120 | 225 | 70,5 | 52,0 | $45,3 \times 10^{-5}$ |
| LPBCop5 | 8 | 0,2 | 130 | 0,8 | 120 | 277 | 108,0 | 70,0 | $45,7 \times 10^{-5}$ |
| LPBCop7 | 8 | 0,2 | 130 | 0,8 | 120 | 330 | 90,2 | 31,0 | $46,3 \times 10^{-5}$ |
| LPBA-Scop6 | 4 | 0,5 | 50 (BA) 15 (S) | 0,0 | 60 | 138 | 37,9 | | |

### III - PROCESSUS D'AGGLOMERATION

#### 1) Mode opératoire général

Sous agitation mécanique, on a ajouté, par l'intermédiaire d'une burette, des proportions variables de latex agglomérants de concentrations différentes, aux différents types de latex à agglomérer. Sauf indication contraire, une masse initiale et constante de 30 g de latex à agglomérer à été choisie. Pendant l'addition du latex agglomérant, une agitation douce est assurée grâce à un barreau magnétique. Cette agitation es poursuivie pendant quelques minutes après l'addition de latex agglomérant, puis elle est ensuite arrêtée.

#### 2) Unités de concentration choisies

Dans ce qui suit, on désigne par R le rapport de la masse de polymère agglomérant dans 100 g de latex final à la masse de polymère à agglomérer dans 100 g de latex final. Si l'on pose :

$m_1$ = masse de polymère agglomérant

$m_1^L$ = masse de latex agglomérant

$x_1$ = taux de solide du latex agglomérant

et

$m_2$ = masse de polymère à agglomérer

$m_2^L$ = masse de latex à agglomérer

$x_2$ = taux de solide du latex à agglomérer,

$$\text{alors } R = \frac{m_1}{m_2} = \frac{m_1^L x_1}{m_2^L x_2}$$

Si C est l'extrait sec final exprimé en masse totale de polymère dans 100 g de latex,

$$C = \frac{m_1 + m_2}{m_1^L + m_2^L} \qquad \text{avec } m_1^L + m_2^L = 100$$

[Cop] est la masse de tensio-actif copolymère tri-séquencé POE-PS-POE ajouté pour 100 g de latex à agglomérer en extrait sec. On a également défini le rapport $I = D_{90}/D_{10}$, où $D_{90}$ et $D_{10}$ indiquent les diamètres cumulés constituant respectivement 90% et 10% du volume des particules.

3) Agglomération des latex de polybutadiène par les latex agglomération acryliques-copolymères triséquencés POE-PS-POE

a) Influence de la méthode de mélange

Latex à agglomérer : LPBA ($\varnothing$ = 104 nm ; $x_2$ = 32,2%)
Latex agglomérant : LPBACop 4a ($\varnothing$=135nm ; $x_1$ = 4,52%)

TABLEAU 5

| Essai | $R \times 10^{+2}$ | C g/100 g | (Cop) $\times 10^{+2}$ | Latex aggloméré | |
|---|---|---|---|---|---|
| | | | | $\varnothing$ moyen (nm) | écart type (nm) |
| 1* | 0,46 | 31,30 | 0,029 | 201 | VB |
| | 0,92 | 30,47 | 0,058 | 450 | 172 |
| | 1,17 | 30,07 | 0,072 | 607 | VB |
| | 1,41 | 23,68 | 0,087 | 605 | 210 |
| | 1,84 | 28,11 | 0,116 | 490 | 149 |
| | 2,82 | 27,58 | 0,174 | 438 | 138 |
| | 4,23 | 25,81 | 0,241 | 390 | 115 |
| 2** | 0,87 | 30,57 | 0,053 | 402 | 142 |
| | 0,97 | 30,40 | 0,059 | 450 | 151 |
| | 1,09 | 30,19 | 0,067 | 542 | 181 |
| | 1,25 | 29,92 | 0,076 | 612 | 163 |
| | 1,46 | 29,58 | 0,089 | 573 | 157 |
| | 1,75 | 29,12 | 0,107 | 510 | 141 |
| | 2,19 | 28,45 | 0,134 | 449 | 116 |
| | 2,92 | 27,42 | 0,179 | 392 | 96 |
| | 4,38 | 25,60 | 0,268 | 386 | 110 |
| | 8,77 | 21,54 | 0,537 | 302 | 76 |

\* Température d'agglomération: 17 °C

\*\* Température d'agglomération: 25 °C

VB = très large

Dans l'essai 1, on a additionné le latex agglomérant au latex à agglomérer et dans l'essai 2, on a additionné le latex à agglomérer au latex agglomérant.

On constate que la méthode de mélange utilisée pour effectuer l'agglomération n'a pas ici d'influence particulière sur le diamètre des particules agglomérées.

b) Influence du temps sur la méthode d'agglomération

Latex à agglomérer : LPB3 ($x_2$ = 31,0%)
Latex agglomérant : LPBACop 3

### TABLEAU 6

| Essai | Latex agglo-mérant-ajouté $x_1$ (%) | R $\times 10^{+2}$ | Latex aggloméré | | |
|---|---|---|---|---|---|
| | | | Temps (h) | Ø moyen (nm) | écart type (nm) |
| 3 * | 2,4 | 0,78 | 0,06 | 195 | 73,0 |
| | | | 0,13 | 204 | 73,9 |
| | | | 0,25 | 209 | 78,7 |
| | | | 0,50 | 212 | 83,2 |
| | | | 1,5 | 215 | 81,5 |
| | | | 48,0 | 216 | 85,1 |
| 4 ** | 4,8 | 3,13 | 0,02 | 264 | 89,3 |
| | | | 0,2 | 347 | 126 |
| | | | 0,4 | 382 | 99,8 |
| | | | 0,5 | 372 | 124 |
| | | | 0,8 | 400 | 122 |
| | | | 1,0 | 446 | 163 |
| | | | 1,25 | 461 | 168 |
| | | | 1,75 | 476 | 170 |
| | | | 2,0 | 476 | 167 |
| | | | 48,0 | 493 | 173 |

\* Extrait sec final: C = 28,40

\*\* Extrait sec final: C = 28,61

Le temps t = 0, début de l'agglomération, est pris à la fin de l'addition du latex agglomérant dans le latex de polybutadiène.

L'agglomération de ce type de latex est rapide, car le diamètre final est obtenu suivant le système considéré de quelques minutes à environ une heure.

## c) Influence des concentrations respectives du latex à agglomérer et du latex agglomérant

### 1 - Variation de la taille des particules en fonction de la concentration totale C pour R constant

Latex à agglomérer : LPB5
Latex agglomérant : LPBACop4a
Température d'agglomération : 25°C

TABLEAU 7

| Essai | $x_1$ (%) | $x_2$ (%) | $R \times 10^{+2}$ | C g/100 g | Temps (h) | Ø moyen (nm) | écart type (nm) | $\dfrac{D_{90}}{D_{10}}$ |
|---|---|---|---|---|---|---|---|---|
| 5 | 4,5 | 32,3 | 1,39 | 29,77 | 0,01 | 282 | 99 | 2,2 |
| | | | | | 0,16 | 357 | 115 | 2,2 |
| | | | | | 0,33 | 368 | 126 | 2,3 |
| | | | | | 0,76 | 394 | 121 | 2,2 |
| | | | | | 1,91 | 445 | 137 | 2,1 |
| | | | | | 3,08 | 457 | 157 | 2,2 |
| | | | | | 22,0 | 545 | 187 | 2,0 |
| 6 | 2,2 | 16,1 | 1,37 | 14,83 | 0,01 | 141 | 45 | 2,0 |
| | | | | | 0,25 | 173 | 57 | 2,1 |
| | | | | | 0,50 | 186 | 65 | 2,3 |
| | | | | | 1,00 | 195 | 67 | 2,0 |
| | | | | | 2,50 | 199 | 68 | 2,2 |
| | | | | | 24,0 | 280 | 98 | -- |
| 7 | 1,1 | 8,0 | 1,38 | 7,37 | 0,01 | 103 | 22 | 1,8 |
| | | | | | 1,00 | 106 | 22 | 1,8 |
| | | | | | 4,00 | 113 | 26 | 1,8 |
| | | | | | 24,0 | 143 | 42 | -- |

2 - Variation de la taille des particules agglomérées en fonction de R pour C constant

Latex à agglomérer : LPB3 ($x_2$= 31%)
Latex agglomérant : LPBACop 3
Température d'agglomération : 17°C

TABLEAU 8

| Essai | $x_1$ (%) | R $\times 10^{+2}$ | C g/100 g | Temps (h) | Ø moyen (nm) | écart type (nm) | $\dfrac{D_{90}}{D_{10}}$ |
|---|---|---|---|---|---|---|---|
| 3 | 2,4 | 0,78 | 28,39 | 0,06 | 195 | 73 | 2,3 |
| | | | | 0,13 | 204 | 74 | 2,2 |
| | | | | 0,25 | 209 | 78 | 2,3 |
| | | | | 0,50 | 212 | 83 | 2,3 |
| | | | | 1,5 | 215 | 81 | 2,3 |
| | | | | 48,0 | 216 | 85 | 2,1 |
| 8 | 4,8 | 1,56 | 28,51 | 1 | 530 | 185 | — |
| | | | | 24 | 580 | 233 | — |
| 4 | 4,8 | 3,13 | 29,05 | 0,02 | 264 | 89 | 2,1 |
| | | | | 0,2 | 347 | 126 | 2,1 |
| | | | | 0,4 | 382 | 99 | 2,2 |
| | | | | 0,5 | 372 | 124 | 1,7 |
| | | | | 0,8 | 400 | 122 | 1,9 |
| | | | | 1,0 | 446 | 163 | 2,1 |
| | | | | 1,25 | 461 | 168 | 2,1 |
| | | | | 1,75 | 476 | 170 | 1,8 |
| | | | | 2,0 | 476 | 167 | 2,2 |
| | | | | 48,0 | 493 | 173 | 1,9 |

3 - <u>Variation de la taille des particules agglomérées en fonction du temps (R et C variables)</u>

Latex à agglomérer : LPB4 ou LPB5
Latex agglomérant : LPBCop4<u>a</u> ($x_1$=4,5%)
Température d'agglomération : 25°C

TABLEAU 9

| Essai | $x_2$ (%) | $R \times 10^{+2}$ | C g/100 g | Temps (h) | Ø moyen (nm) | écart type (nm) | $\dfrac{D_{90}}{D_{10}}$ |
|---|---|---|---|---|---|---|---|
| 5 | 32,3 (LPB5) | 1,39 | 29,77 | 0,01 | 282 | 99 | 2,2 |
|  |  |  |  | 0,16 | 357 | 115 | 2,2 |
|  |  |  |  | 0,33 | 368 | 126 | 2,3 |
|  |  |  |  | 0,76 | 394 | 121 | 2,2 |
|  |  |  |  | 1,91 | 445 | 137 | 2,1 |
|  |  |  |  | 3,08 | 457 | 157 | 2,2 |
|  |  |  |  | 22,0 | 545 | 187 | 2,0 |
| 9 | 16,1 (LPB5) | 0,69 | 15,04 | 0,01 | 175 | 104 | 2,1 |
|  |  |  |  | 0,16 | 189 | 127 | 2,0 |
|  |  |  |  | 0,33 | 192 | 118 | 2,2 |
|  |  |  |  | 1,91 | 250 | 129 | 2,2 |
|  |  |  |  | 2,50 | 270 | 110 | 2,2 |
|  |  |  |  | 24,0 | 354 | 127 | 2,1 |
| 2 | 32,2 (LPB4) | 0,87 | 30,57 | 24,0 | 402 | 142 | 1,9 |
|  |  | 0,97 | 30,40 | 24,0 | 450 | 151 | 2,0 |
|  |  | 1,09 | 30,19 | 24,0 | 542 | 181 | 2,0 |
|  |  | 1,25 | 29,92 | 24,0 | 612 | 163 | 2,0 |
|  |  | 1,46 | 29,58 | 24,0 | 573 | 157 | 1,9 |
|  |  | 1,75 | 29,12 | 24,0 | 510 | 141 | 1,8 |
|  |  | 2,19 | 28,45 | 24,0 | 449 | 116 | 1,8 |
|  |  | 2,92 | 27,42 | 24,0 | 392 | 96 | 1,8 |
|  |  | 4,38 | 25,60 | 24,0 | 386 | 110 | 1,9 |
|  |  | 8,77 | 21,54 | 24,0 | 302 | 76 | 2,0 |

4 - Discussion

On constate que l'évolution de la taille des particules agglomérées dépend fortement de la durée d'agglomération, de R et de C. Dans tous les cas, pour un C élevé, la durée d'agglomération est rapide et quasiment immédiate.

d) Effet de la température

Latex à agglomérer : LPB3 ($x_2$ = 31,0%)
Latex agglomérant : LPBACop3 ($x_1$ - 4,82%)
R x $10^{10+2}$ = 3,10
C (g/100 g) = 26,63

TABLEAU 10

| Essai | T (°C) | Latex aggloméré | | |
|---|---|---|---|---|
| | | Temps (h) | Ø moyen (nm) | écart type (nm) |
| 10 | 65 | 0,02 | 286 | 103 |
| | | 0,18 | 303 | 102 |
| | | 0,20 | 299 | 109 |
| | | 0,50 | 298 | 105 |
| | | 1,00 | 304 | 114 |
| | | 1,50 | 329 | 121 |
| | | 2,00 | 315 | 113 |
| | | Arrêt du chauffage | | |
| 11 | | 2,25 | 448 | 153 |
| | | 2,75 | 458 | 153 |
| | | 6,00 | 491 | 147 |

On constate que l'augmentation de la température d'agglomération a pour effet de diminuer assez fortement le diamètre des particules agglomérées. En effet, le diamètre maximal atteint lors de l'agglomération à T = 17°C est de 480 nm, alors qu'il n'est que de 300 nm à T = 65°C. En revanche, si le chauffage est arrêté à ce diamètre et que la température d'agglomération est fixée à T = 11°C le plus rapidement possible, on observe une poursuite de l'agglomération pour atteindre un diamètre final de 490 nm qui est similaire au diamètre obtenu lors d'une agglomération à une température basse (T = 17°C).

e) Effet des caractéristiques des latex agglomérants

1 - Influence de la masse moléculaire des séquences POE sur l'agglomération du latex de polybutadiène LPB4 ($x_2 = 32.2\%$ ; $\varnothing = 104$ nm)

Température d'agglomération : 17°C
Temps d'agglomération : 24 h.

TABLEAU 11

| Essai | Latex agglomérant | | R $\times 10^{+2}$ | C g/100 g | [Cop] $\times 10^{+2}$ | Latex aggloméré | |
| --- | --- | --- | --- | --- | --- | --- | --- |
| | Type | $x_1$ (%) | | | | $\varnothing$ moyen (nm) | écart type (nm) |
| 11 | LPBACop1 | 4,81 | 0,74 | 30,89 | 0,043 | 250 | VB |
| | | | 1,49 | 29,71 | 0,085 | 425 | 158 |
| | | | 2,48 | 28,28 | 0,143 | 556 | 187 |
| | | | 4,48 | 25,88 | 0,257 | 410 | 149 |
| 12 | LPBACop4a | 1,13 | 0,35 | 29,37 | 0,021 | 166 | 58 |
| | | | 0,70 | 27,02 | 0,042 | 219 | VB |
| | | | 1,05 | 25,04 | 0,084 | 303 | 113 |
| 13 | | 2,26 | 0,70 | 29,47 | 0,043 | 244 | VB |
| | | | 2,10 | 25,29 | 0,087 | 474 | 189 |
| 1 | | 4,52 | 0,46 | 31,30 | 0,029 | 201 | VB |
| | | | 0,92 | 30,47 | 0,058 | 450 | 172 |
| | | | 1,17 | 30,07 | 0,072 | 607 | VB |
| | | | 1,41 | 29,68 | 0,087 | 605 | 210 |
| 14 | | | 1,41 | 29,68 | 0,087 | 605 | 220 |
| | | | 1,41 | 29,68 | 0,087 | 597 | VB |
| 1 | | | 1,84 | 28,11 | 0,116 | 490 | 149 |
| 14 | | | 2,82 | 27,58 | 0,174 | 455 | 137 |
| 1 | | | 2,82 | 27,58 | 0,174 | 438 | 138 |
| | | | 4,23 | 25,81 | 0,241 | 390 | 115 |
| 14 | | | 4,23 | 25,81 | 0,241 | 404 | 117 |
| 15 | LPBACop7 | 1,06 | 0,32 | 29,37 | 0,021 | 172 | VB |
| | | | 1,09 | 25,01 | 0,084 | 380 | VB |
| 16 | | 4,24 | 0,43 | 31,29 | 0,029 | 191 | VB |
| | | | 0,86 | 30,45 | 0,058 | 363 | |
| | | | 1,10 | 30,04 | 0,072 | 790 | |
| | | | 1,32 | 28,67 | 0,087 | 1396 | |
| | | | 2,64 | 27,54 | 0,174 | 766 | |
| | | | 3,96 | 25,74 | 0,241 | 607 | |
| 17 | LPBACop2 | 1,10 | 0,34 | 29,37 | 0,021 | 170 | VB |
| 18 | | 4,41 | 0,45 | 31,30 | 0,029 | 210 | |
| | | | 0,67 | 30,46 | 0,042 | 263 | |
| | | | 0,90 | 30,10 | 0,058 | 382 | |
| | | | 1,13 | 30,06 | 0,072 | 635 | |
| | | | 1,35 | 29,61 | 0,087 | 905 | |
| 19 | | | 1,35 | 29,61 | 0,087 | 915 | |
| 18 | | | 1,58 | 28,10 | 0,102 | 700 | |
| | | | 2,71 | 27,56 | 0,174 | 638 | |
| 19 | | | 4,06 | 25,81 | 0,241 | 481 | |

VB = très large

2 - Influence de la masse moléculaire des séquences POE sur les latex de polybutatiène LPB2 ($x_2$ = 30,7% ; ∅ = 181 nm) et LPB1 ($x_2$ = 30,6% ; ∅ = 203 nm)

Température d'agglomération : 17°C
Temps d'agglomération : 24 h.

TABLEAU 12

| Essai | Latex de polybutadiène | Latex agglomérant | | | R $\times 10^{+2}$ | C (g/100 g) | [Cop] $\times 10^{+2}$ | Latex aggloméré | |
|---|---|---|---|---|---|---|---|---|---|
| | | Type | $x_1$ (%) | ∅ (nm) | | | | ∅ moyen (nm) | écart type |
| 20 | LPB2 | LPBACop4a | 1,13 | 135 | 0,37 | 28,01 | 0,022 | 450 | 161 |
| | | | | | 1,10 | 23,87 | 0,066 | 471 | 154 |
| 21 | | | 4,52 | | 0,49 | 29,85 | 0,030 | 377 | VB |
| 22 | | | | | 1,47 | 28,32 | 0,091 | 528 | 229 |
| 21 | | | | | 1,47 | | 0,091 | 492 | VB |
| 23 | | | | | 2,94 | 26,33 | 0,182 | 373 | 146 |
| 22 | | | | | 2,94 | | 0,182 | 388 | 124 |
| 23 | | | | | 4,41 | 24,65 | 0,273 | 320 | 95 |
| 22 | | | | | 4,41 | | | 337 | 55 |
| 21 | | | | | 4,4 | | | 391 | 151 |
| 24 | | LPBACop7 | 1,06 | 185 | 0,35 | 28,00 | 0,022 | 666 | VB |
| 25 | | | 4,24 | | 1,38 | 28,29 | 0,091 | | |
| | | | | | 4,14 | 24,59 | 0,273 | | |
| 26 | LPBA | LPBACop4a | 4,52 | | 1,47 | 28,22 | 0,022 | 610 | VB |
| | | | 4,52 | | 2,95 | 26,25 | 0,182 | 450 | 153 |
| | | | 4,52 | | 4,43 | 24,58 | 0,273 | 385 | VB |

VB = très large

15

3 - <u>Influence de la concentration initiale en agent tensio-actif copolymère triséquencé POE-PS-POE</u>

Latex à agglomérer : LPB4 ($x_2$ = 32,2% ; $\varnothing$ = 104nm)
Température d'agglomération : 17°C
Température d'agglomération : 24 h.

TABLEAU 13

| Essai | Latex agglomérant | | | $R$ $\times 10^{+2}$ | [Cop] $\times 10^{+2}$ | Latex aggloméré | |
| --- | --- | --- | --- | --- | --- | --- | --- |
| | Type | $x_1$ (%) | $\varnothing$ moyen (nm) | | | $\varnothing$ moyen (nm) | écart type (nm) |
| 12 | LPBACop4a | 1,13 | 135 | 0,35 | 0,021 | 166 | 58 |
| | | | | 0,70 | 0,042 | 219 | VB |
| | | | | 1,05 | 0,084 | 303 | 113 |
| 1 | | 4,52 | | 0,46 | 0,029 | 201 | VB |
| | | | | 0,92 | 0,058 | 450 | 172 |
| | | | | 1,17 | 0,072 | 607 | VB |
| | | | | 1,41 | 0,087 | 605 | 210 |
| | | | | 1,84 | 0,116 | 490 | 149 |
| | | | | 2,82 | 0,174 | 455 | 137 |
| | | | | 4,23 | 0,241 | 390 | 115 |
| 27 | LPBACop4c | 1,21 | 114 | 0,75 | 0,054 | 358 | 125 |
| 28 | | 4,84 | | 0,75 | 0,054 | 268 | 101 |
| 29 | | | | 1,00 | 0,072 | 461 | VB |
| | | | | 1,25 | 0,109 | 574 | VB |
| 28 | | | | 1,25 | 0,109 | 544 | 193 |
| 30 | | | | 1,25 | 0,109 | 539 | 192 |
| 29 | | | | 1,75 | 0,145 | 475 | 164 |
| | | | | 2,00 | 0,182 | 470 | 142 |
| | | | | 2,50 | 0,218 | 405 | 104 |
| | | | | 3,00 | 0,255 | 394 | 136 |
| 28 | | | | 3,00 | | 415 | 130 |
| | | | | 4,51 | 0,401 | 392 | 138 |
| 29 | | | | 4,51 | | 365 | 104 |
| 28 | | | | 7,51 | 0,545 | 329 | 137 |

VB = très large

On constate qu'une agglomération plus ou moins importante est obtenue suivant le type et la concentration du tensio-actif triséquencé POE-PS-POE utilisé. Il apparaît que plus le Mn des séquences POE est élevé, plus le diamètre des particules agglomérées est important.

4 - Influence de la taille des particules du latex agglomérant

Latex agglomérant : LPBACop4b (Ø = 197 nm)
Température d'agglomération : 17°C
Temps d'agglomération : 24 h.

TABLEAU 14

| Essai | Latex de polybutadiène | | | $x_1$ (%) | R $\times 10^{+2}$ | [Cop] $\times 10^{+2}$ | Latex aggloméré | |
|---|---|---|---|---|---|---|---|---|
| | Type | $x_2$ (%) | Ø moyen (nm) | | | | Ø moyen (nm) | écart type (nm) |
| 31 | LPB4 | 32,2 | 104 | 1,06 | 0,32 | 0,021 | 167 | VB |
| | | | | | 0,64 | 0,041 | 247 | VB |
| | | | | | 1,09 | 0,084 | 359 | VB |
| 32 | | | | 4,24 | 1,32 | 0,087 | 644 | VB |
| | | | | | 2,64 | 0,174 | 623 | 210 |
| | | | | | 3,96 | 0,241 | 658 | 171 |
| 33 | LPB2 | 30,7 | 181 | 1,06 | 0,34 | 0,022 | 365 | 116 |
| | | | | | 1,05 | 0,066 | 461 | VB |
| 34 | | | | 4,24 | 1,41 | 0,091 | 965 | VB |
| 35 | | | | 4,24 | | 0,273 | 1634 | |

VB = très large

Les tailles des particules agglomérées obtenues dépendant bien de la taille des particules de latex agglomérantes. Cet effet, sensible pour des particules de faibles tailles, devient très important lorsque la taille des particules à agglomérer est grande.

4 - Agglomération du latex de polybutadiène par les latex agglomératants de polybutadiène-copolymères triséquencés POE-PS-POE

a) Influence de la masse moléculaire des séquences POE

Latex à agglomérer : LPB5 ($\varnothing$ = 1000 nm ; $x_2$= 32,3%)
Latex agglomérants : LPBCop5 ($\varnothing$ = 225nm ; $x_1$ = 2,5%)
Latex agglomérants : LPBCop6 ($\varnothing$ = 277nm ; $x_1$= 3,6%)
Température d'agglomération : 25°C

## TABLEAU 15

| Essai | Latex agglo-mérant | R $\times 10^{+2}$ | C (g/100 g) | [Cop] $\times 10^{+2}$ | Latex aggloméré | |
|---|---|---|---|---|---|---|
| | | | | | $\varnothing$ moyen (nm) | écart ty-pe (nm) |
| 36 | LPBCop5 | 0,67 | 29,92 | 0,074 | 132 (0,5) | 47 |
| | | | | | 135 (48 | 49 |
| 37 | LPBCop5 | 1,34 | 27,89 | 0,148 | 173 (0,5) | 64 |
| | | | | | 179 (48) | 66 |
| 38 | LPBCop5 | 2,58 | 24,85 | 0,285 | 214 (48) | 81 |
| 39 | LPBCop5 | 3,09 | 23,78 | 0,342 | 245 (48) | 92 |
| 40 | LPBCop5 | 7,73 | 17,40 | 0,856 | 324 (48) | 95 |
| 41 | LPBCop5 | 10,31 | 15,27 | 1,142 | 335 (48) | 109 |
| 42 | LPBCop6 | 1,1 | 29,69 | 0,085 | 216 (0,5) | 79 |
| | | | | | 227 (48) | 83 |
| 43 | LPBCop6 | 2,2 | 27,51 | 0,717 | 275 (48) | |

b) Influence de la taille des particules de polybutadiène

Latex à agglomérer : LPB5 ($\emptyset = 100$ nm ; $x_2 = 32,3\%$)
Latex à agglomérer : LBP2 ($\emptyset = 181$ nm ; $x_2$- 30,7%)
Latex agglomérant : LPBCop5 ($\emptyset$ 225nm ; $x_1 = 2,5\%$)
Température d'agglomération : 25°C

TABLEAU 16

| Essai | Latex de poly- butadiène | $R \times 10^{+2}$ | $C$ (g/100 g) | [Cop] $\times 10^{+2}$ | Latex aggloméré | |
|---|---|---|---|---|---|---|
| | | | | | $\emptyset$ moyen (nm) | écart type (nm) |
| 36 | LPB5 | 0,67 | 29,92 | 0,074 | 135 | 49 |
| 37 | | 1,34 | 27,89 | 0,148 | 179 | 66 |
| 38 | | 2,58 | 24,85 | 0,285 | 214 | 81 |
| 39 | | 3,09 | 23,78 | 0,342 | 245 | 92 |
| 40 | | 7,73 | 17,40 | 0,856 | 324 | 95 |
| 44* | LPB2 | 0,81 | 28,13 | 0,090 | 232 | 67 |
| 45 | | 1,63 | 26,01 | 0,180 | 240 | 35 |
| 46 | | 2,44 | 24,00 | 0,270 | 256 | 63 |
| 47 | | 3,24 | 22,64 | 0,361 | 284 | 68 |
| 48 | | 8,14 | 16,60 | 0,901 | 323 | 82 |

*Méthode de mélange utilisée = addition du latex de polybutadiène au latex agglomérant.

D'après les résultats obtenus, on constate que l'agglomération mettant en oeuvre les latex sus-indiqués est fonction de la méthode de mélange des deux latex (il faut parfois choisir l'addition du latex à agglomérer au latex agglomérant), de la concentration en tensio-actif, de la taille initiale du latex de polybutadiène et de la masse moléculaire des séquences POE, donc de la taille du latex agglomérant.

5 - Agglomération des latex de polybutacrylate par des latex agglomérants acryliques-copolymères triséquencés POE-PS-POE

Latex à agglomérer : LPBA1 ($\emptyset = 139$ nm ; $x_2 = 23,1\%$)
Latex agglomérant : LPBACop4a ($\emptyset = 135$ nm ; $x_1 = 4,5\%$)
Température d'agglomération : 25°C.

TABLEAU 17

| Essai | $R \times 10^{+2}$ | $C$ (g/100 g) | [Cop] $\times 10^{+2}$ | Latex aggloméré | |
|---|---|---|---|---|---|
| | | | | $\emptyset$ moyen (nm) | écart type (nm) |
| 49* | 1,5 | 29,75 | 0,098 | 153 | 42 |
| | 3,5 | 26,31 | 0,230 | 177 | 34 |
| | 7,3 | 22,97 | 0,496 | 218 | 31 |
| | 8,9 | 21,79 | 0,586 | 238 | 70 |
| | 13,6 | 18,85 | 0,898 | 260 | — |
| | 22,6 | 15,22 | 1,496 | 260 | 64 |

* LPBA1 préparé en présence de laurate de potassium comme tensio-actif.

6) Autres agglomérations

a) Agglomération des latex de polybutadiène par les latex agglomérants butylacrylique-styrénique-copolymères triséquencés POE-PS-POE

Latex à agglomérer LPB4 ($\varnothing$ = 104 nm ; $x_2$= 32,2%)
Latex agglomérant : LPBA-SCop6 ($\varnothing$=138nm ; $x_1$=4,68%)
Température d'agglomération : 25°C
Temps d'agglomération : 24 h.

TABLEAU 18

| Essai | R $\times 10^{+2}$ | C (g/100 g) | [Cop] $\times 10^{+2}$ | Latex aggloméré | |
|---|---|---|---|---|---|
| | | | | $\varnothing$ moyen (nm) | écart type (nm) |
| 50 | 0,48 | 31,31 | 0,028 | 191 | VB |
| | 0,97 | 30,48 | 0,057 | 437 | 147 |
| | 1,45 | 29,69 | 0,085 | 496 | 173 |
| | 1,94 | 28,96 | 0,114 | 484 | 170 |
| | 2,90 | 27,61 | 0,172 | 438 | 142 |
| | 4,36 | 25,85 | 0,256 | 376 | 131 |

b) Agglomération des latex de poly(acrylate de butyle) par les latex agglomérants butadièniques copolymères séquencés POE-PS-POE

Latex à agglomérer : LPBA1 ($\varnothing$ = 139 nm ; $x_2$ = 33,1%)
ou LPBA2 ($\varnothing$ = 125 nm ; $x_2$ = 32,9%)
Latex agglomérant : LPBCop5 ($\varnothing$ = 225 nm ; $x_1$ = 2,5%)
Température d'agglomération : 25°C
Temps d'agglomération = 48 h.

TABLEAU 19

| Essai | Latex à agglomérer | R $\times 10^{+2}$ | C (g/100 g) | Latex aggloméré | |
|---|---|---|---|---|---|
| | | | | $\varnothing$ moyen (nm) | écart type (nm) |
| 51 | LPBA1* | 0,84 | 30,04 | 330 | 119 |
| 52 | LPBA2** | 0,75 | 30,13 | 329 | VB |

\* LPBA1 : tensio-actif: laurate de potassium

\*\* LPBA2 : tensio-actif: SDS

VB = très large

c) Agglomérations diverses

### TABLEAU 20

| Essai | Latex à agglomérer | Latex agglomérant | R x10^{+2} | C (g/100 g) | Latex aggloméré | |
|-------|--------------------|--------------------|-----------|-------------|-----------------|---|
| | | | | | Ø moyen (nm) | écart type (nm) |
| 53 | LPS | LPBCop5 | 4,9 | 4,8 | 358 | – |
| 54 | LPB** | LPSCop4 + SDS | 3,2 | 26,28 | 190 | 70 |
| | | | 6,5 | 24,85 | 223 | 82 |
| | | | 9,6 | 23,63 | 350 | 131 |
| 55 | LPS** | LPBA-Cop4a + SDS | 0,9 | 30,1 | 181 | VB |
| | | | 5,5 | 27,1 | 288 | VB |
| | | | 8,2 | 25,7 | 390 | 131 |
| | | | 13,7 | 23,4 | 280 | 89 |

\* LPB' ($\emptyset = 84,5$ nm; $x_1 = 28,0\%$)

\*\* LPS' ($\emptyset = 83,5$ nm; $x_1 = 30,9\%$)

VB = très large

La présente invention sera encore illustrée par les exemples suivants :

On a utilisé, pour préparer les latex agglomérants mis en oeuvre, deux polymères triséquencés POE-PS-POE dont les caractéristiques sont indiquées dans le Tableau 21 suivant :

### TABLEAU 21

| Cop | M du Cop* | M de chaque séquence POE | % PS** |
|-----|-----------|--------------------------|--------|
| 8 | 77 000 | 15 000 | 20 |
| 9 | 25 000 | 4 000 | 33,3 |

Ont été préparés une série de latex agglomérants LPBACop selon le mode opératoire général suivant :

Dans un réacteur de 2 l, on introduit de l'eau, éventuellement du méthanol, dans les pourcentages en poids indiqués dans le tableau 22 suivant, 23% en poids d'acrylate de butyle, ainsi que, par rapport au monomère, 6% en poids de polymère triséquencé et 0,6% en poids de TDM. On chauffe jusqu'à 70°C, avec une vitesse d'agitation de 250 tours/mn. Quand la température atteint 70°C, on ajoute 0,15% en poids de $K_2S_2O_8$ par rapport au monomère. La durée de synthèse est fixée à 4 heures.

On a suivi le mode opératoire ci-dessus pour préparer ces différents latex LPBACop, comme indiqué dans le Tableau 22 ci-après, dans lequel figurent également les caractéristiques de ces latex.

Dans ce tableau, figurent également les caractéristiques d'un latex de polystyrène préparé en batch dans un réacteur de 2 l, les ingrédients (91% en poids d'eau + Cop 8 ; 9% en poids de styrène et 1% en poids de TDM) étant chargés dans le réacteur et chauffés à 90°C et avec une vitesse d'agitation de 200 tours/mn, le persulfate de potassium étant ensuite ajouté et la durée de synthèse étant fixée à 3 heures.

### TABLEAU 22

| Type de latex agglomérant | % d'eau | % de méthanol | Ø moyen (nm) | $x_1$ (%) |
|---------------------------|---------|---------------|--------------|-----------|
| LPBACop 8a | 77 | 0 | 340 | 23 |
| LPBACop 8b | 67 | 10 | 200 | 22,5 |
| LPBACop 8c | | | 320 | 23 |
| LPBACop 9a | 55 | 22 | 130 | 19 |
| LPBACop 9b | 67 | 10 | 220 | 23 |
| LPSCop 8 | 91 | 25 | 160 | 25 |

Les caractéristiques des latex à agglomérer utilisés dans cette série d'exemples figurent dans le tableau 23 ci-après :

TABLEAU 23

| Type de latex à agglomérer | Ø moyen (nm) | $x_2$ (%) | pH |
|---|---|---|---|
| LPB6* | 110 | 30 | 10 |
| LPB7 | 110 | 30 | 12 |
| LPB8 | 150 | 30 | 12 |
| LPBA3** | 80 | 31 | 4,5 |
| LPBA4** | 75 | 28 | 4,5 |
| LSBR | 230 | 40 | 11 |

* latex comportant $10^{-2}$ mole de SDS pour 100 g de latex.

** synthétisé avec SDS comme tensio-actif.

Pour effectuer l'agglomération, le latex agglomérant est ajouté en batch au latex à agglomérer additionné le cas échéant du tensio-actif SDS, sous agitation mécanique. La température, la durée d'agglomération, ainsi que tous les paramètres influençant l'évolution de la taille des particules agglomérées (mesurée par turbidimétrie) ont été étudiés.

a) Influence de la durée d'agglomération

Latex à agglomérer : LPB6
Latex agglomérant : LPBA Cop 9a
Conditions opératoires : Température : 20°C; R = 2 x $10^{-2}$

TABLEAU 24

| Essai | Durée (h) | Latex aggloméré Ø moyen (nm) |
|---|---|---|
| 56 | 0,5 | 280 |
| | 2 | 470 |
| | 6 | 840 |
| | 12 | 1010 |
| | 24 | 1010 |

Au bout de 12 heures d'agglomération, la taille des particules est stable.

b) Influence des concentrations respectives de latex à agglomérer et agglomérant

1 - Variation de la taille des particules agglomérées en fonction de la concentration totale C pour R constant.

Latex à agglomérer : LPB8
Latex agglomérant : LPBACop8a
Conditions opératoires : Température: 20°C; R = 2 x $10^{-2}$; pH = 12

TABLEAU 25

| Essai | C g/100 g | Temps (h) | Latex aggloméré Ø moyen (nm) |
|---|---|---|---|
| 58 | 30 | 1 | 300 |
| | | 24 | 430 |
| 59 | 50 | 1 | 660 |
| | | 24 | 1000 |

2 - <u>Variation de la taille des particules agglomérées en fonction de R pour C constant.</u>

Latex à agglomérer : LPB8
Latex agglomérant : LPBACop8a
Conditions opératoires : Température : 20°C
Durée : 24 heures ; pH = 12

### TABLEAU 26

| Essai | $R \times 10^{-2}$ | C (g/100 g) | Latex aggloméré $\varnothing$ moyen (nm) |
|---|---|---|---|
| 58 | 1 | 30 | 430 |
| 60 | 2 | 30 | 660 |
| 61 | 3 | 30 | 700 |
| 62 | 5 | 30 | 580 |
| 63 | 8 | 30 | 580 |
| 64 | 0,5 | 50 | 820 |
| 59 | 1 | 50 | >1000 |
| 65 | 2 | 50 | 660 |
| 66 | 3 | 50 | 580 |

c) <u>Influence des caractéristiques des latex agglomérants.</u>

1 - <u>Influence de la taille des particules</u>

Latex à agglomérer : LPB8
Conditions opératoires : Température : 20°C ;
Durée : 24 heures ; pH = 8

### TABLEAU 27

| Essai | Latex agglomérant | $R \times 10^2$ | $\varnothing$ moyen (nm) |
|---|---|---|---|
| 67 | LPBACop8b | 1 | 600 |
| 68 | LPBACop8b | 2 | 620 |
| 69 | LPBACop8b | 3 | 600 |
| 70 | LPBACop8b | 5 | 550 |
| 71* | LPBACop8b | 7 | 480 |
| 72* | LPBACop8a | 1 | 640 |
| 73* | LPBACop8a | 2 | >1000 |
| 74* | LPBACop8a | 3 | 960 |
| 75* | LPBACop8a | 5 | 780 |

* addition de $1,5 \times 10^{-4}$ mole de SDS/100 g
de latex à agglomèrer

2 - Influence de la masse moléculaire des séquences POE des polymères triséquencés POE-PS-POE

Latex à agglomérer : LPB8 + 1,5 x 10$^{-4}$ mole de SDS/100 g de latex
Conditions opératoires : Température : 20°C ;
Durée : 24 heures

TABLEAU 28

| Essai | Latex agglo-mérant | R x 10$^2$ | Ø moyen (nm) |
|---|---|---|---|
| 76 | LPBACop9b | 1 | 450 |
| 77 | LPBACop9b | 2 | 450 |
| 78 | LPBACop9b | 3 | 500 |
| 72 | LPBACop8a | 1 | 640 |
| 73 | LPBACop8a | 2 | >1000 |
| 74 | LPBACop8a | 3 | 960 |
| 75 | LPBACop9b | 5 | 780 |
| 79 | LPBACop9b | 5 | 700 |
| 80 | LPBACop9b | 7 | 480 |

d) Influence des caractéristiques des latex à agglomérer

1 - Influence du pH des latex de polybutadiène

Latex à agglomérer : LPB8
Latex agglomérant : LPBACop8a
Conditions opératoires : Température : 20°C ;
Durée : 24 heures

TABLEAU 29

| Essai | pH | R x 10$^2$ | C (g/100 g) | SDS mole 10$^4$ | Latex aggloméré Ø moyen (nm) |
|---|---|---|---|---|---|
| 64 | 12 | 0,5 | 50 | 0 | 820 |
| 59 | | 1 | 50 | 0 | >1000 |
| 65 | | 2 | 50 | 0 | 660 |
| 66 | | 3 | 50 | 0 | 580 |
| 63 | | 8 | 50 | 0 | 580 |
| 81 | 8* | 1 | 50 | 1,5 | 600 |
| 82 | | 2 | 50 | 1,5 | 620 |
| 83 | | 3 | 50 | 1,5 | 700 |
| 84 | | 5 | 50 | 1,5 | 1000 |
| 85 | | 7 | 50 | 1,5 | 820 |
| 58 | 12 | 1 | 30 | 1,5 | 430 |
| 60 | | 2 | 30 | 1,5 | 660 |
| 61 | | 3 | 30 | 1,5 | 700 |
| 62 | | 5 | 30 | 1,5 | 580 |
| 63 | | 8 | 30 | 1,5 | 640 |
| 72 | 8* | 1 | 30 | 1,5 | 640 |
| 73 | | 2 | 30 | 1,5 | >1000 |
| 74 | | 3 | 30 | 1,5 | 960 |
| 75 | | 5 | 30 | 1,5 | 780 |

* pH du latex à agglomérer amené à 8 par addition d'une solution
d'acide chlorhydrique diluée.

2 - Influence du taux de couverture du latex à agglomérer

Latex agglomérant : LPBCop8a
Conditions opératoires : Température : 20°C ;
Durée : 24 heures

TABLEAU 30

| Essai | Latex à agglomérer | Taux de couverture | $R \times 10^2$ | Latex aggloméré Ø moyen (nm) |
|---|---|---|---|---|
| 57 | LPB7 | >100 | 2 | 420 |
| 58 | LPB8 | 80 – 85 | 1 | 430 |
| 60 | LPB8 | | 2 | 660 |
| 61 | LPB8 | | 3 | 700 |
| 62 | LPB8 | | 5 | 580 |
| 63 | LPB8 | | 8 | 580 |

L'agglomération est plus importante pour le latex qui a un taux de couverture moindre.

e) Autres agglomérations

Conditions opératoires : Température : 20°C ;
Durée : 24 heures

TABLEAU 31

| Essai | Latex agglomérant | Latex à agglomérer | $R \times 10^2$ | Latex aggloméré Ø moyen (nm) |
|---|---|---|---|---|
| 86 | LPSCop8 | LPB8 | 1 | 420 |
| 87 | LPSCop8 | LPB8 | 2 | 450 |
| 88 | LPSCop8 | LPB8 | 3 | 700 |
| 89 | LPSCop8 | LPB8 | 5 | 550 |
| 90 | LPSCop8 | LPB8 | 7 | 460 |
| 91 | LPBACop8c | LPBA3 | 1 | 185 |
| 92 | LPBACop8c | LPBA3 | 3 | 200 |
| 93 | LPBACop8c | LPBA3 | 5 | 420 |
| 94 | LPBACop8c | LPBA3 | 7 | 550 |
| 95 | LPBACop8c | LPBA3 | 10 | 840 |
| 96 | LPBACop8c | LPBA3 | 15 | 800 |
| 97 | LPBACop8c | LPBA3 | 20 | 545 |
| 98* | LPSCop8 | LPBA4 | 1 | 230 |
| 99* | LPSCop8 | LPBA4 | 3 | 550 |
| 100 | LPBACop8c | LSBR | ≥ 0,5 | > 1 µm |

* Addition au latex à agglomérer de $10^4$ mole de SDS pour 100 g de latex.

Le dessin ci-annexé illustre l'aspect intéressant du procédé selon la présente invention qui a été évoqué plus haut et suivant lequel les courbes représentant la taille des particules agglomérées en fonction de R passent par un maximum, la population étant respectivement bimodale ou monomodale suivant que R est inférieur ou supérieur à la valeur correspondant à ce maximum.

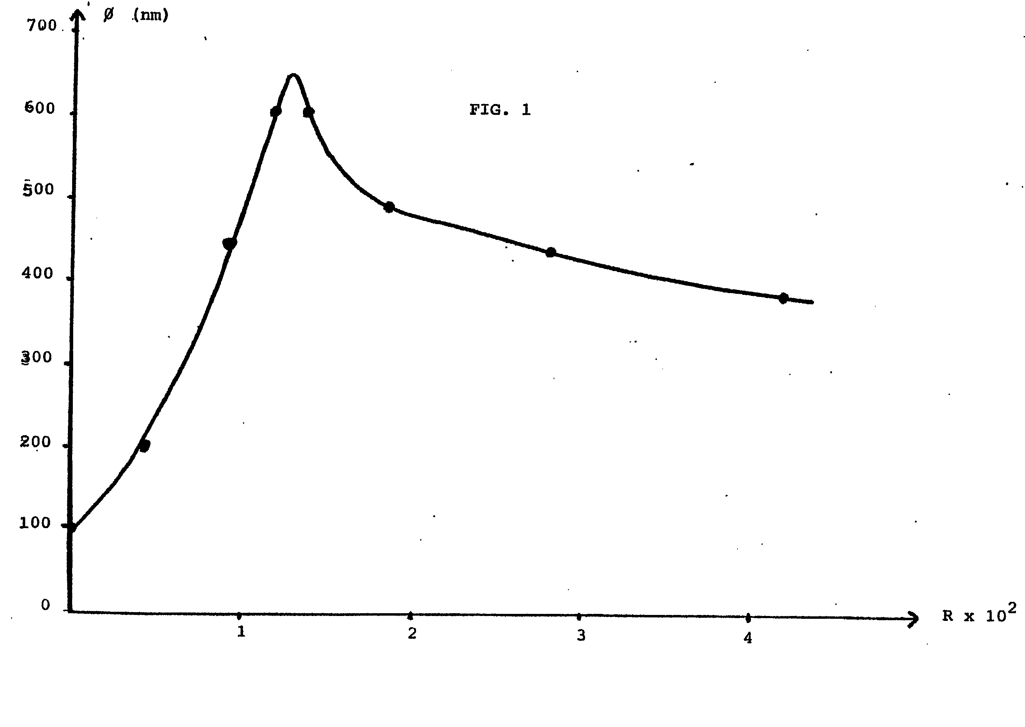

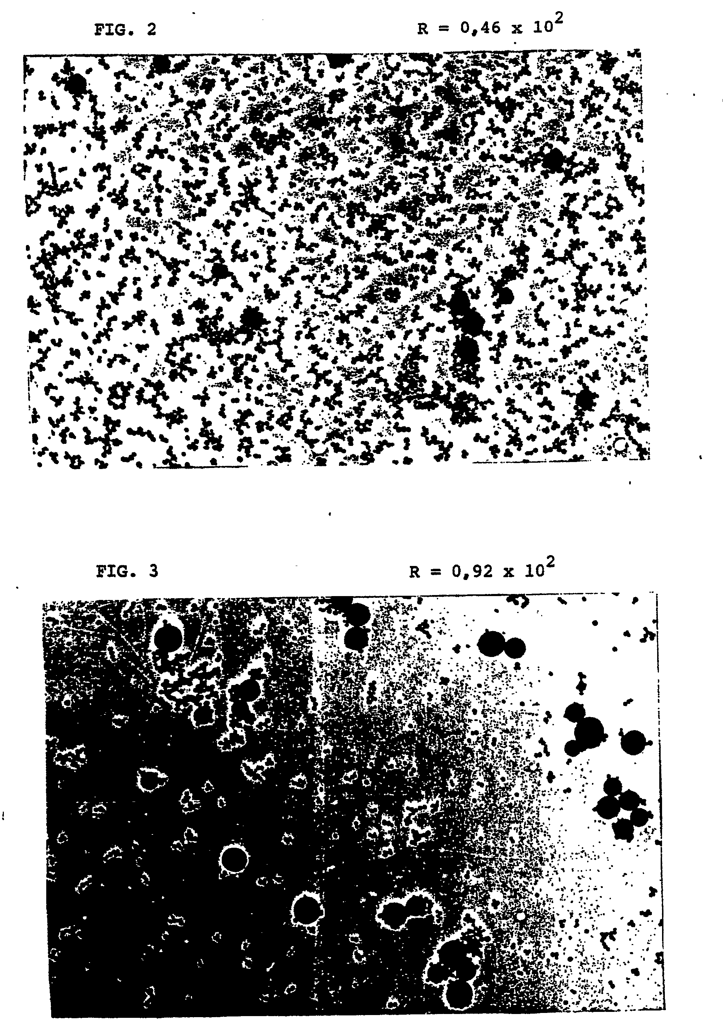

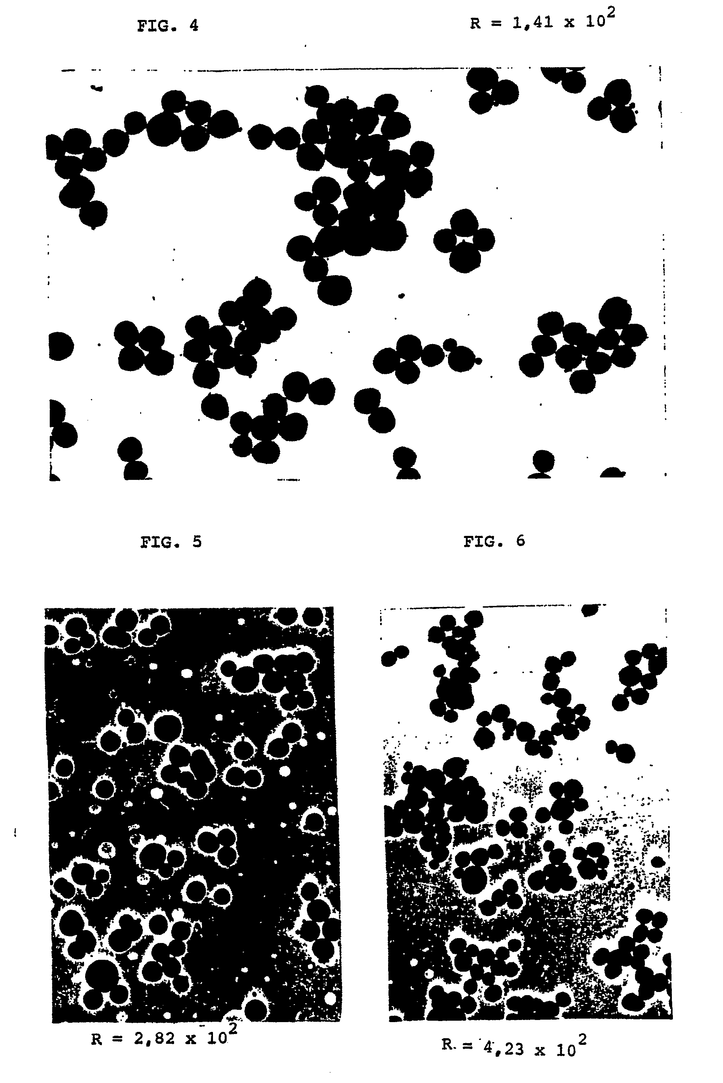

La figure 1 du dessin ci-annexé représente la courbe ø (nm) = F ($R \times 10^2$), correspondant à l'essai n° 1. La morphologie des particules de latex agglomérées a été déterminée par microscopie électronique par transmission pour cinq valeurs de R, les cinq reproductions photogra phiques correspondantes faisant l'objet des figures respectivement 2 à 6 sur chacune desquelles est indiquée la valeur correspondante de R. Le grossissement est de 10 000. Sur les figures 2 et 3, pour lesquelles R est inférieur à la valeur correspondant au maximum, on remarque une population bimodale, et sur les figures 4 à 6, pour lesquelles R est supérieur à la valeur correspondant au maximum, on remarque une population monomodale.

## Revendications

1 - Procédé d'agglomération d'un latex de polymère choisi parmi les élastomères et les résines thermoplastiques, caractérisé par le fait qu'on effectue le mélange du latex à agglomérer avec un latex agglomérant formé de:

(A) un polymère choisi parmi les élastomères et les résines thermoplastiques ; et

(B) un agent tensio-actif non-ionique consistant en un polymère séquencé comportant au moins une séquence polyoxyéthylène et au moins une séquence d'un polymère choisi parmi les polymères vinyliques, diéniques, d'esters acryliques et méthacryliques,

ledit latex agglomérant étant obtenu par la synthèse du polymère défini sous (A) au cours de laquelle (B) a été utilisé comme tensio-actif.

2 - Procédé selon la revendication 1, caractérisé par le fait que l'on choisit les polymères des latex à agglomérer et agglomérants parmi les homopolymères et copolymères du butadiène, de l'isoprène, du styrène, de l'alpha-méthylstyrène, des vinyltoluènes, de l'acrylonitrile, des esters alkyliques, des acides acrylique, méthacrylique, maléique, fumarique, crotonique et itaconique, dans lesquels le groupe alkyle possède de 1 à 12 atomes de carbone, les latex à agglomérer pouvant également être des latex de SBR ou des latex acryliques multicouches.

3 - Procédé selon l'une des revendications 1 et 2, caractérisé par le fait que l'on choisit un agent tensio-actif non-ionique (B) consistant en un polymère triséquencé, de préférence en un polymère comportant deux séquences polyoxyéthylène d'extrémité.

4 - Procédé selon l'une des revendications 1 à 3, caractérisé par le fait que l'on choisit un polymère dont la (ou les) séquence(s) autre(s) que la (ou les) séquence(s) polyoxyéthylène est (ou sont) constituée(s) par du polystyrène.

5 - Procédé selon l'une des revendications 1 à 4, caractérisé par le fait que l'on utilise un tensio-actif (B) présentant une masse moléculaire en nombre comprise entre 1000 et 1 000 000.

6 - Procédé selon l'une des revendications 1 à 5, caractérisé par le fait que l'on utilise un tensio-actif (B) renfermant de 5 à 95% en poids de polyoxyéthylène.

7 - Procédé selon l'une des revendications 1 à 6, caractérisé par le fait que l'on utilise un latex à agglomérer préparé par polymérisation en émulsion en présence d'un agent tensio-actif anionique, le diamètre des particules de polymère dans ledit latex étant compris entre 50 et 300 nm et le taux de solide dudit latex étant compris entre 5 et 50% en poids.

8 - Procédé selon l'une des revendications 1 à 7, caractérisé par le fait que l'on utilise un latex agglomérant dans lequel le diamètre des particules du polymère (A) est compris entre 60 et 500 nm et qui présente un taux de solide compris entre 1 et 40% en poids.

9 - Procédé selon l'une des revendications 1 à 8, caractérisé par le fait qu'on effectue le mélange d'agglomération pendant un temps compris entre une minute et 48 heures.

10 - Procédé selon l'une des revendications 1 à 9, caractérisé par le fait qu'on effectue le mélange d'agglomération à une température comprise entre 10°C et 100°C.

11 - Latex agglomérés obtenus par le procédé tel que défini à l'une des revendications 1 à 10.

12 - Application d'un latex aggloméré tel que défini à la revendication 11, à la modification de matrices thermoplastiques rigides pour les rendre résistantes au choc, ces matrices étant constituées par des polymères thermoplastiques rigides d'au moins un monomère choisi parmi les méthacrylates d'alkyle, dont le groupe alkyle comprend de 1 à 4 atomes de carbone, le styrène, les styrènes substitués, l'acrylonitrile, le méthacrylonitrile, ou par des polymères de plus de 50% en poids d'au mois l'un des monomères précités et d'au moins un autre monomère copolymérisable à insaturation monoéthylénique.

## Claims

1. Process for agglomerating a latex of a polymer chosen from elastomers and thermoplastic resins, characterized in that the latex to be agglomerated is mixed with an agglomerating latex consisting of:

(A) a polymer chosen from elastomers and thermoplastic resins; and

(B) a nonionic surface-active agent consisting of a block polymer containing at least one polyoxyethylene block and at least one block of a polymer chosen from vinyl, diene and acrylic and methacrylic ester polymers, the said agglomerating latex being produced by the synthesis of the polymer defined under (A) during which (B) has been employed as a surfactant.

2. Process according to Claim 1, characterized in that the polymers of the latices to be agglomerated and the agglomerating latices are chosen from homopolymers and copolymers of butadiene, isoprene, styrene, alpha-méthylstyrène, vinyltoluenes, acrylonitrile and alkyl esters of acrylic, methacrylic, maleic, fumaric, crotonic and itaconic acids in which the alkyl group contains from 1 to 12 carbon atoms, it being also possible for the latices to be agglomerated to be SBR latices or multilayer acrylic latices.

3. Process according to either of Claims 1 and 2, characterized in that a nonionic surface-active agent (B) is chosen, which consists of a triblock polymer, preferably of a polymer containing two terminal polyoxyethylene blocks.

4. Process according to one of Claims 1 to 3, characterized in that a polymer is chosen in which the block(s) other than the polyoxyethylene block(s) consists (or consist) of polystyrene.

5. Process according to one of Claims 1 to 4, characterized in that a surfactant (B) with a number molecular mass of between 1000 and 1,000,000 is employed.

6. Process according to one of Claims 1 to 5, characterized in that a surfactant (B) containing from 5 to 95% by weight of polyoxyethylene is employed.

7. Process according to one of Claims 1 to 6, characterized in that the latex to be agglomerated, prepared by emulsion polymerization in the presence of an anionic surface-active agent is employed, the diameter of the polymer particles in the said latex lying between 50 and 300 nm and the solids content of the said latex lying between 5 and 50% by weight.

8. Process according to one of Claims 1 to 7, characterized in that an agglomerating latex is employed, in which the particle diameter of the polymer (A) lies between 60 and 500 nm and which has a solids content of between 1 and 40% by weight.

9. Process according to one of Claims 1 to 8, characterized in that the agglomeration mixing is carried out for a period of time of between one minute and 48 hours.

10. Process according to one of Claims 1 to 9, characterized in that the agglomeration mixing is carried out at temperature of between 10° and 100°C.

11. Agglomerated latices produced by the process such as defined in one of Claims 1 to 10.

12. Application of an agglomerated latex such as defined in Claim 11, to the modification of rigid thermoplastic matrices to make them impact-resistant, these matrices consisting of rigid thermoplastic polymers of at least one monomer chosen from alkyl methacrylates in which the alkyl group contains from 1 to 4 carbon atoms, styrene, substituted styrenes, acrylonitrile and methacrylonitrile, or of polymers with more than 50% by weight of at least one of the abovementioned monomers and at least one other ethylenically monounsaturated copolymerizable monomer.

**Patentansprüche**

1. Verfahren zur Agglomeration eines Polymerlatex ausgewählt aus den Elastomeren und den thermoplastischen Harzen, dadurch gekennzeichnet, daß man eine Mischung aus dem zu agglomerierenden Latex mit einem die Agglomeration hervorrufenden Latex, gebildet aus

(A) einem Polymeren ausgewählt aus den Elastomeren und den thermoplastischen Harzen und

(B) einem nicht-ionischen oberflächenaktiven Mittel bestehend aus einem Blockpolymeren, welches mindestens einen Polyoxyäthylenblock und mindestens einen Block eines Polymeren ausgewählt aus Vinylpolymeren, Dienpolymeren, Acrylestern und Methacrylestern aufweist, wobei der genannte die Agglomeration hervorrufende Latex durch Synthese des unter (A) definierten Polymeren, in deren Verlauf (B) als oberflächenaktives Mittel verwendet wurde, erhalten wurde, herstellt.

2. Verfahren nach Anspruch 1, dadurch gekennzeichnet, daß man die Polymeren der zu agglomerierenden und der die Agglomeration hervorrufenden Latices aus den Homopolymeren und Copolymeren von Butadien, Isopren, Styrol α-Methylstyrol, Vinyltoluolen, Acrylnitril, Alkylestern von Acrylsäure, Methacrylsäure, Maleinsäure, Fumarsäure, Crotonsäure und Itaconsäure auswählt, in welchen die Alkylgruppe 1 bis 12 C-Atome aufweist, wobei die zu agglomerierenden Latices gleichfalls auch Latices von SBR oder mehrlagige Acryllatices sein können.

3. Verfahren nach einem der Ansprüche 1 und 2, dadurch gekennzeichnet, daß man ein nicht-ionisches oberflächenaktives Mittel (B) auswählt, welches aus Dreiblockpolymeren besteht, vorzugsweise aus einem Polymeren, welches zwei endständige Polyoxyäthylenblöcke aufweist.

4. Verfahren nach einem der Ansprüche 1 bis 3, dadurch gekennzeichnet, daß man ein Polymeres auswählt, bei welchem der Block (die Blöcke) ein anderer ist (oder andere sind) als der (die Polyoxyäthylenblock) (-blöcke) und welcher (welche) von Polystyrol abgeleitet ist (sind).

5. Verfahren nach einem der Ansprüche 1 bis 4, dadurch gekennzeichnet, daß man ein oberflächenaktives Mittel (B) verwendet, dessen Zahlmittlere Molekularmasse zwischen einschließlich 1000 und 1 000 000 liegt.

6. Verfahren nach einem der Ansprüche 1 bis 5, dadurch gekennzeichnet, daß man ein oberflächenaktives Mittel (B) verwendet, welches 5 – 95 Gew. -% Polyoxyäthylen enthält.

7. Verfahren nach einem der Ansprüche 1 bis 6, dadurch gekennzeichnet, daß man einen zu agglomerierenden Latex verwendet, welcher durch Emulsionspolymerisation in Gegenwart eines anionischen oberflächenaktiven Mittels hergestellt wurde, wobei der Durchmesser der Partikel des Polymeren in dem genannten Latex zwischen einschließlich 50 und 300 nm liegt und der Prozentsatz an Feststoff des genannten Latex zwischen einschließlich 5 und 50 Gew.-% beträgt.

8. Verfahren nach einem der Ansprüche 1 bis 7, dadurch gekennzeichnet, daß man einen zu agglomerierenden Latex verwendet bei welchem der Durchmesser der Partikel des Polymeren (A) zwischen einschließlich 60 und 500 nm liegt und der einen Prozentsatz an Feststoff zwischen einschließlich 1 und 40 Gew.-% aufweist.

9. Verfahren nach einem der Ansprüche 1 bis 8, dadurch gekennzeichnet, daß man die Agglomerationsmischung während eines Zeitraumes zwischen einschließlich 1 min und 48 h herstellt.

10. Verfahren nach einem der Ansprüche 1 bis 9, dadurch gekennzeichnet, daß man die Agglomerationsmischung bei einer Temperatur zwischen einschließlich 10°C und 100°C herstellt.

11. Agglomerierte Latices, die nach einem der in den Ansprüchen 1 bis 10 definierten Verfahren erhalten wurden.

12. Verwendung eines agglomerierten Latex wie in Anspruch 11 definiert zur Modifikation von starren thermoplastischen Matrizen, um sie schlagfest zu machen, wobei diese Matrizen aus starren thermoplastischen Polymeren von mindestens einem Monomeren ausgewählt aus Alkylmethacrylaten, deren Alkylgruppe 1 bis 4 C-Atome aufweist, Styrol, substituiertes Styrol, Acrylnitril, Methacrylnitril oder aus Polymeren mit mehr als 50 Gew.-% mindestens eines der vorgenannten Monomeren und mindestens eines anderen Monomeren, das durch monoäthylenische Ungesättigtheit copolymerisierbar ist, gebildet sind.

FIG. 1

Ø (nm)

R x 10²

EP 0 249 554 B1

FIG. 2
$R = 0,46 \times 10^2$

FIG. 3
$R = 0,92 \times 10^2$

FIG. 4

$$R = 1,41 \times 10^2$$

FIG. 5

FIG. 6

$$R = 2,82 \times 10^2$$

$$R = 4,23 \times 10^2$$